# EUROPÄISCHE PATENTSCHRIFT

(11) **EP 1 070 380 B1**
(45) Veröffentlichungstag und Bekanntmachung des Hinweises auf die Patenterteilung: **28.10.2009**
(21) Anmeldenummer: 98965119.5
(22) Anmeldetag: 14.12.1998
(51) Int. Cl.: H02K 23/66

(54) **ELEKTROMOTORISCHER ANTRIEB**
ELECTRIC MOTOR DRIVE MECHANISM
DISPOSITIF D'ENTRAINEMENT PAR MOTEUR ELECTRIQUE

(30) Priorität: 08.04.1998 DE 19815702
(43) Veröffentlichungstag der Anmeldung: 24.01.2001
(73) Patentinhaber: ROBERT BOSCH GMBH, 70442 Stuttgart (DE)
(72) Erfinder: WEBER, Matthias, D-76534 Baden-Baden (DE); KNAB, Norbert, D-77767 Appenweier (DE); SCHMID, Roland, D-70599 Stuttgart (DE); DEPTULA, Piotr, D-75428 Illingen (DE)
(86) Internationale Anmeldenummer: PCT/DE1998/003665
(87) Internationale Veröffentlichungsnummer: WO 1999/053598

(56) Entgegenhaltungen:
- EP-A- 0 359 853
- EP-A- 0 489 940
- WO-A-98/10971
- DE-A- 4 337 390
- DE-A- 19 710 015
- FR-A- 2 696 595
- GB-A- 2 289 351
- US-A- 5 245 258

## Beschreibung

### Stand der Technik

Die Erfindung geht aus von einem elektromotorischen Antrieb nach der Gattung des Hauptanspruchs.

Aus der Druckschrift DE 43 37 390 C2 ist ein elektromotorischer Antrieb mit einem Elektronikmodul bekannt, das eine Schaltung zum Speisen des Elektromotors des Antriebs trägt. Die Bürstenführung einer Kommutierungseinrichtung des Elektromotors ist mit einem durch ein Elektrochassis gebildeten, tragenden Bauteil des Elektronikmoduls verbunden. Die Bestromung der Bürsten der Kommutierungseinrichtung erfolgt über Leiterbahnen, die nicht Bestandteil einer Leiterplatte des Elektronikmoduls sind. Als Leiterbahnen werden Metallbahnen vorgeschlagen.

Ferner sind elektromotorische Antriebe mit Bürstenhaltern bekannt, an denen ein Steckergehäuse mit Anschlußsteckern angeformt ist. Die Bürstenhalter befinden sich im Inneren des Elektromotors des Antriebs. An den Bürstenhaltern sind Leiterplatten mit Hall-Sensoren angeordnet, die über Einlege-Leiterbahnen in elektrischem Kontakt mit den Anschlußsteckern mit Energie versorgt werden.

Diese Anordnung hat den Nachteil, daß das Anbringen der Leiterplatten am Kommutator fertigungstechnisch aufwendig ist und die Leiterplatten bei einem Defekt nur schwer ausgetauscht werden können. Darüber hinaus sind die Elektronikbauteile auf der Leiterplatte im Inneren des Motors rauhen Umgebungsbedingungen ausgesetzt. Zum einen ist die Temperatur im Innern des Motors erhöht, zum anderen kann sich durch den Motorbetrieb entstehender Abrieb der Kohlebürsten, der Ankerwellenlager oder der Ankerwelle selbst auf die Elektronikbauteile legen und Fehlfunktionen und Kurzschlüsse auslösen.

### Vorteile der Erfindung

Die Erfindung mit den Merkmalen des Hauptanspruchs hat den Vorteil, daß eine Motorsteuerungs- und Leistungselektronik bis auf einen odere mehrere Magnetfeldsensoren vollständig außerhalb des Elektromotors angeordnet ist. Da die Magnetfeldsensoren nicht wie in den vorbekannten Lösungen auf der Elektronikplatine angeordnet sind, sind die beim Einbau der Elektronikplatine einzuhaltenden Toleranzen weniger kritisch als bei den vorbekannten Vorrichtungen. Darüber hinaus wird ein modularer Aufbau möglich, da unterschiedliche Steuerelektroniken auf unterschiedlichen Elektronikplatinen für den gleichen Motor ohne Änderung des Motorkonzeptes vorgesehen sein können und eine neue Elektronik durch Austausch der Elektronikplatine eingebaut werden kann. Weil die Elektronikplatine außerhalb des Motorraumes angeordnet ist, ist sie deutlich besser gegen Abrieb des Elektromotors geschützt. Als Magnetfeldsensoren kommen insbesondere Hallsensoren oder magnetoresitive Sensoren in Frage.

Der Begriff der Einlege-Leiterbahnen ist so zu verstehen, daß diese Leiterbahnen nicht Bestandteil einer Leiterplatte sind. Vielmehr dienen sie der Kontaktierung eines räumlich von einer Leiterplatte entfernt angeordneten elektronischen Bauteils mit der Leiterplatte. Sie bestehen beispielsweise aus Metallbahnen, die separate Bauteile bilden können, oder auf andere Bauteile des Elektromotors aufgetragen sind.

Vorteilhafte Weiterbildungen und Ausgestaltungen der Erfindung ergeben sich aus den abhängigen Unteransprüchen.

Der erfindungsgemäße elektromotorische Antrieb kann besonders kostengünstig hergestellt werden, wenn die Elektronikplatine eine im wesentlichen rechteckige Grundfläche hat. In diesem Fall können Standardleiterplatten verwendet werden. Es ist nicht mehr erforderlich, die Grundfläche der Leiterplatten aufwendig nach der Kontur des Poltopfgehäuses auszulegen. Kleinere Abweichungen von der Rechteckform können einfach und kostengünstig hergestellt werden.

In einer günstigen Ausgestaltung ist die Elektronikplatine quer zu der Drehachse der Motorankerwelle angeordnet. Diese Anordnung ist besonders platzsparend, da das Elektronikgehäuse dann klein ausfallen kann.

Vorteilhaft ist das Poltopfgehäuse des Elektromotors gegen die Elektronikplatine abgedichtet. Durch diese Maßnahme ist die Elektronikplatine noch besser gegen Abrieb des Elektromotors geschützt. Auch das Eindringen von Feuchtigkeit und anderen Stoffen in den Elektromotor wird wirkungsvoll verhindert.

Wenn der Träger an dem Übergang zum Bürstenhalter eine Verjüngung aufweist und die Einlege-Leiterbahn(en) in die Verjüngung integriert sind, werden sie aus dem Poltopfgehäuse hinaus bis zu der Elektronikplatine ohne weitere Maßnahmen nach außen geschützt geführt. Neben dem mechanischen Schutz durch die Unterbringung im Bürstenhalter/Träger sind sie wirkungsvoll auch elektrisch geschützt. Durch die Verjüngung zwischen dem Träger und dem Bürstenhalter kann der Träger der Elektronikplatine bei außen an dem Elektronikgehäuse angreifenden Kräften innerhalb gewisser Grenzen elastisch ausweichen, wodurch die Gefahr von Brüchen vermindert ist.

In einer Ausgestaltung der Erfindung sind zwei Magnetfeldsensoren vorgesehen und der Bürstenhalter und der Träger weisen wenigstens näherungsweise eine Spiegelachse quer zur Achse der Motorankerwelle in der Ebene der Elektronikplatine auf. Die Magnetfeldsensoren sind in Umfangsrichtung zu dem Magnetrad in näherungsweise gleichen Winkeln bezüglich des Mittelpunktes des Magnetrades und der Spiegelachse angeordnet. Die Verwendung von zwei Drehzahlsensoren ermöglicht die Bestimmung der Drehrichtung durch Auswertung der Phasenverschiebung der Sensorsignale. Insgesamt hat diese Ausgestaltung den Vorteil, daß die Einlege-Leiterbahnen besonders platzsparend angeordnet werden können.

Die platzsparende Anordnung kann noch verbessert werden, wenn der wenigstens eine Magnetfeldsensor tangential zu dem Rand einer Ausnehmung des Bürstenhalters zur Aufnahme des Magnetrades angeordnet ist, die Einlege-Leiterbahnen bürstenhalterseitig Kontaktenden zum Magnetfeldsensor aufweisen, und Kontaktbahnen der Einlege-Leiterbahnen zwischen den Kontaktenden und der Elektronikplatine von dem Rand der Ausnehmung zum Rand des Bürstenhalters geführt sind und vom Rand des Bürstenhalters an im wesentlichen parallel zur Kontur des Bürstenhalters bzw. des Trägers und parallel zur Ebene der Elektronikplatine verlaufen. Durch diese spezielle Führung der Einlege-Leiterbahnen wird darüber hinaus die mechanische Stabilität des Bürstenhalter/Trägers verbessert und die Bruchanfälligkeit verringert, da die Leiterbahnen eine skelettartige, tragende Struktur innerhalb des Bürstenhalters und des Trägers bilden. Durch ihre parallele Führung haben die von ihnen übertragenen elektrischen Signale eine geringere Anfälligkeit gegenüber eingestreuten Störsignalen.

Eine weitere vorteilhafte Verbesserung ergibt sich, wenn zur Bestromung der Bürsten zweite Einlege-Leiterbahnen wenigstens teilweise in den Bürstenhalter integriert und zwischen dem Träger und dem Bürstenhalter angeordnet sind. In diesem Fall sind keine separaten elektrischen Durchführungen vom Elektronikgehäuse in den Motor mehr erforderlich, da alle Kontaktbahnen zum Motor innerhalb des Bürstenhalters bzw. Trägers verlaufen.

Weitere vorteilhafte Weiterbildungen und Ausgestaltungen der Erfindung ergeben sich aus den weiteren Unteransprüchen und in Verbindung mit der nachfolgenden Beschreibung.

### Zeichnung

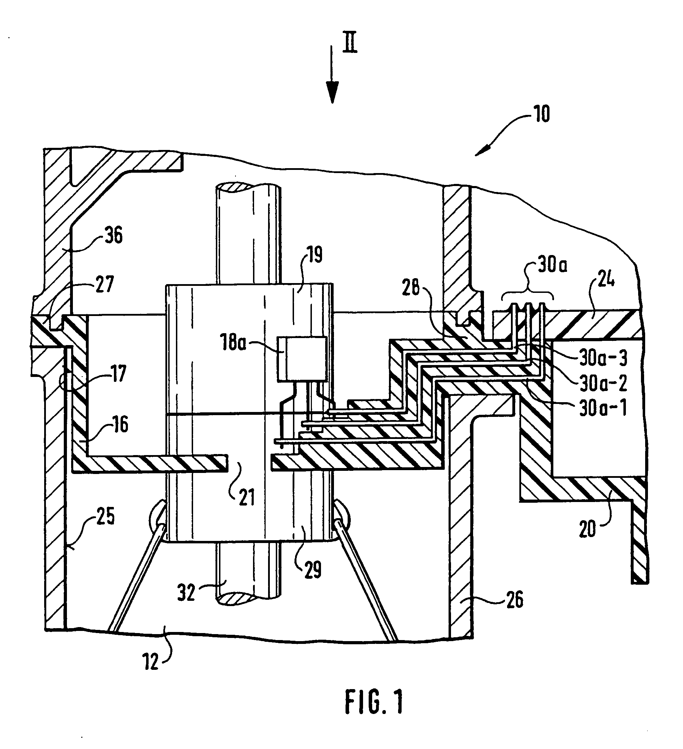

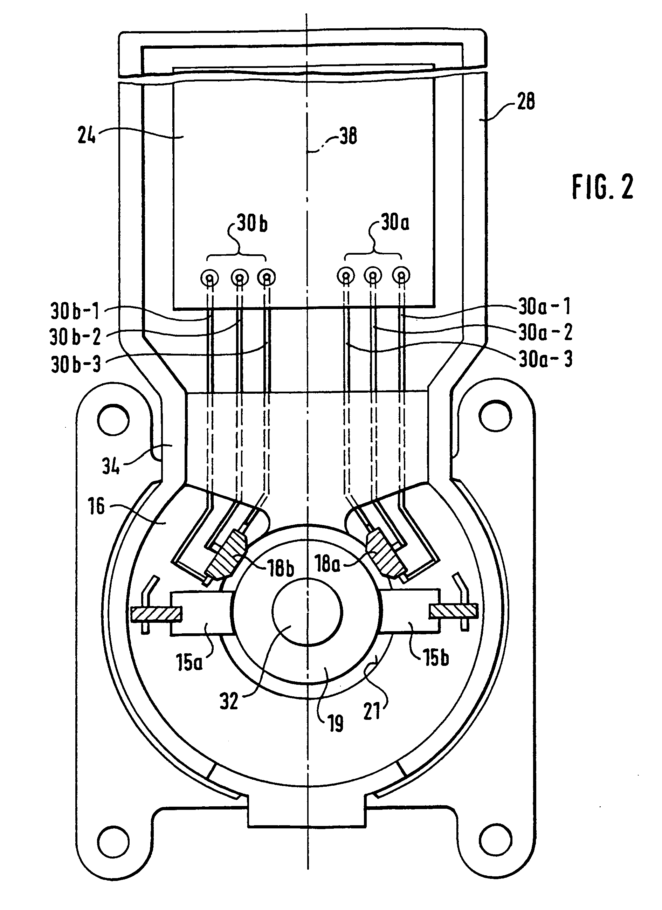

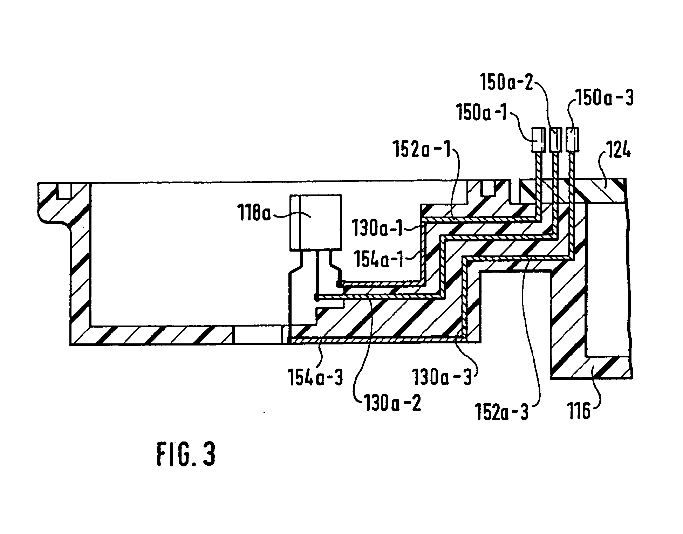

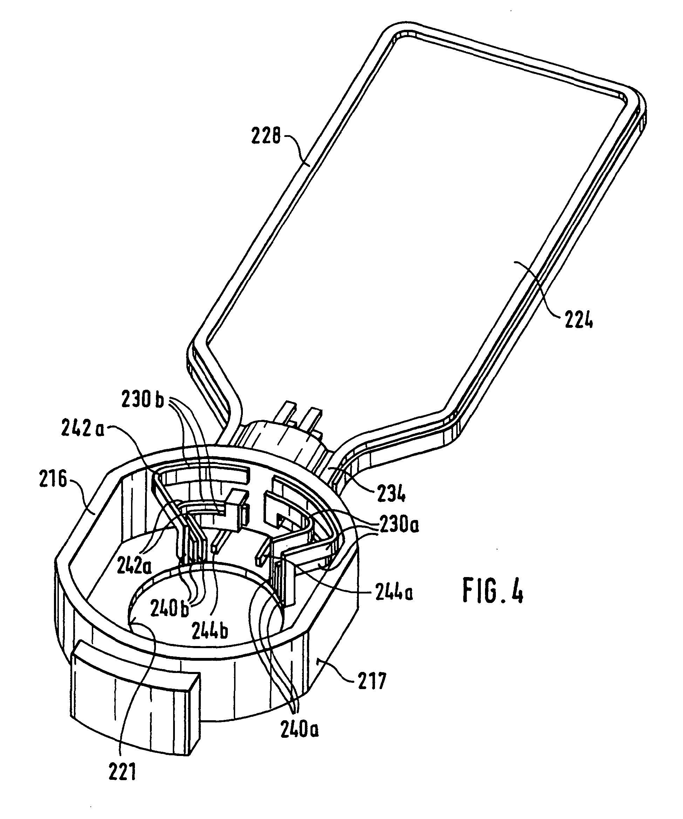

Es zeigen die Figur 1 einen Ausschnitt eines erfindungsgemäßen elektromotorischen Antriebs teilweise geschnitten, die Figur 2 eine Ansicht des Antriebs nach Figur 1 in der Richtung II in Fig. 1, die Figur 3 einen Schnitt durch ein zweites Ausführungsbeispiel eines Bürstenhalter mit daran angespritztem Träger, der in einen elektromotorischen Antrieb nach Fig. 1 alternativ zu dem dort dargestellten Bürstenhalter eingesetzt werden kann, und die Figur 4 eine perspektivische Darstellung eines dritten Ausführungsbeispiels eines Bürstenhalters für einen erfindungsgemäßen elektromotorischen Antrieb.

### Beschreibung der Ausführungsbeispiele

In der Figur 1 ist ein Ausführungsbeispiel des erfindungsgemäßen elektromotorischen Antriebs dargestellt. Ein elektromotorischer Antrieb 10 besteht aus einem Elektromotor 12 und einem nicht näher dargestellten nachgeordneten Getriebe. Der Elektromotor 12 weist einen Bürstenhalter 16 zur Aufnahme von Bürsten 15a, 15b (Figur 2) und zwei Hallsensoren als Magnetfeldsensoren 18a und 18b auf, die mit einem auf einer Motorankerwelle 32 drehfest befestigten Magnetrad 19 zur Bestimmung der Drehung der Motorankerwelle 32 relativ zum Stator des Elektromotors 12 und daraus abgeleiteten Größen zusammenwirken. Eine Ausnehmung 21 des Bürstenhalters 16 wird von der Motorankerwelle 32 durchgriffen. Das Magnetrad 19 sowie ein ebenfalls auf der Motorankerwelle 32 angeordneter Kommutator 29, der über die Bürsten 15a, 15b mit Strom für den Elektromotor 12 versorgt wird, können sich in der Ausnehmung 21 frei drehen. Die Außenkontur 17 des Bürstenhalters 16 fügt sich im wesentlichen der Innenkontur 25 des Poltopfgehäuses 26 ein. Bis auf einen angeformten Ansatz 27, der der Fixierung des Bürstenhalters 16 im Poltopfgehäuse 26 dient, und einen ebenfalls angeformten Träger 28 ist der Bürstenhalter 16 vollständig innerhalb des Poltopfgehäuses 26 bzw. eines Getriebegehäuses 36 untergebracht.

An dem Antrieb 10 ist ein Elektronikgehäuse 20 zur Aufnahme und zum Schutz einer Elektronikplatine 24 angeordnet. Die Elektronikplatine 24 ist mit einem Stecker in einem an dem Elektronikgehäuse 24 angeformten, nicht näher dargestellten Steckerteil kontaktiert und trägt eine Motorleistungs- und Steuerungselektronik. Ihre Grundfläche ist im wesentlichen von rechteckiger Form. Die Elektronikplatine 24 ist quer zu der Drehachse der Motorankerwelle, also mit ihrer Flächennormalen parallel zur Drehachse, außerhalb des Poltopfgehäuses 26 angeordnet und wird von einem an dem Bürstenhalter 16 angeformten Träger 28 getragen, dessen Grundfläche nur wenig größer als die der Elektronikplatine 24 ist. Beide Magnetfeldsensoren 18a und 18b sind jeweils über Gruppen 30a bzw. 30b aus je drei Einlege-Leiterbahnen 30a-1..30a-3 bzw. 30b-1..30b-3 mit der Steuerungselektronik auf der Elektronikplatine 24 elektrisch kontaktiert. Sie bestehen aus geknickten und/oder gekröpften Blech-Biege-/ Stanzteilen und ragen nur an ihren Enden zur Kontaktierung aus dem Träger 28 bzw. dem Bürstenhalter 16 heraus und sind ansonsten vollständig in den Bürstenhalter 16 bzw. den Träger 28 eingespritzt.

Der Träger 28 weist im Übergangsbereich zum Bürstenhalter 16 eine Verjüngung 34 auf (Figur 2). Um die Verjüngung 34 herum sind Dichtungen angeordnet, die den Träger 28 mit der Elektronikplatine 24 einerseits gegen das Getriebegehäuse 36 und andererseits gegen das Poltopfgehäuse 26 abdichten. Die Einlege-Leiterbahnen 30a-1..30a-3 und 30b-1..30b-3 sind durch das Innere der Verjüngung 34 als Durchgangsbereich geführt. Die Elektronikplatine 24 selbst ist somit vollständig gegen das Poltopfgehäuse 26 abgedichtet.

Die Magnetfeldsensoren 18a und 18b sind in einem Winkel von etwa 90° in Umfangsrichtung zu der kreisförmigen Ausnehmung 21 und dem Magnetrad 19, das konzentrisch zu der Ausnehmung 21 liegt, und spiegelsymmetrisch zu einer Achse 38 des Bürstenhalters 16 angeordnet. Die Achse 38 bildet im wesentlichen eine Spiegelachse des Bürstenhalters 16 und des Trägers 28 und schneidet sich mit der Drehachse der Motorankerwelle 32. Die beiden Gruppen 30a und 30b von Einlege-Leiterbahnen 30a-1...30b-3 befinden sich im gleichen Abstand von der Spiegelachse 38 und ihre Projektionen auf die Ebene der Elektronikplatine 24 sind näherungsweise spiegelsymmetrisch zueinander. Alle Einlege-Leiterbahnen 30a-1...30b-3 verlaufen im Ausführungsbeispiel im wesentlichen parallel zu der Zeichenebene der Figur 2, sind in axialer Richtung (senkrecht zur Zeichenebene der Figur 2) jedoch teilweise zueinander versetzt angeordnet.

Eine alternative Ausführungsform eines Bürstenhalters 116 für den Antrieb 10 nach Figur 1 ist in der Figur 3 dargestellt. Hier wird der Hallsensor 118a ebenfalls durch Einlege-Leiterbahnen 130a-1..130a-3 kontaktiert. Die Einlege-Leiterbahnen 130a-1..130a-3 weisen an ihren vom Hallsensor 118a abgewandten Enden zusätzlich Kontaktierungsmittel 150a-1..150a-3 zum Anschluß von Steckverbindungen auf, über die beispielsweise eine externe Elektronik angeschlossen werden kann, sind aber gleichzeitig auch mit der Elektronikplatine 124 kontaktiert. Die Einlege-Leiterbahnen 130a-1 und 130a-3 bestehen jeweils aus einem Blechstanzteil 152a-1 und 152a-3 sowie aus Abschnitten von in der Oberfläche des Kunststoff-Materials des Bürstenhalters 116 versenkt aufgetragenem leitfähigem Material 154a-1 und 154a-3. Die Auftragung kann beispielsweise in der MID-Technik erfolgen. Die Abschnitte 154a-1 und 154a-3 sind Einlege-Leiterbahnen in dem Sinne, daß sie nicht Bestandteil einer Leiterplatte sind, sondern direkt auf den im Spritzverfahren hergestellten Kunststoff-Bürstenhalter 116 aufgetragen sind.

Eine dritte Ausführungsform eines Bürstenhalters 216 für einen erfindungsgemäßen elektromotorischen Antrieb ist in der Figur 4 in einer perspektivischen Zeichnung dargestellt. Die Einlege-Leiterbahnen 230a, 230b sind hier einteilige Stanzteile mit Kontaktenden 240a, 240 und sich daran anschließenden Kontaktbahnen 242a, 242 mit im wesentlichen rechteckigem Querschnitt, die in den Bürstenhalter 216 eingespritzt sind. Die axiale Versetzung der Einlege-Leiterbahnen ist trägerseitig so ausgeführt, daß die Einlege-Leiterbahnen 230a, 230a und 230b, 230b je nach axialer Lage mit der Oberseite oder der Unterseite der Elektronikplatine 224 kontaktiert sind. Mit den Kontaktenden 240a, 240b sind sie mit den vorzugsweise als ICs ausgeführten Hall-Sensoren elektrisch kontaktiert. Die Kontaktbahnen 242a, 242b sind im Bürstenhalter 216 und im Träger 228 so verlegt, daß sie von den Magnetfeldsensoren aus zum Rand des Bürstenhalters 216 geführt sind und vom Rand aus im wesentlichen parallel zur Außenkontur 217 des Bürstenhalters 216, im Übergangsbereich zwischen Bürstenhalter 216 und Träger 228 parallel zur Kontur der Verjüngung 234, verlaufen.

In den Bürstenhalter 216 sowie den Träger 228 sind ferner zweite Einlege-Leiterbahnen 244a und 244b integriert, die auf der Seite des Trägers 228 mit der Elektronikplatine 224 und auf der Seite des Bürstenhalters 216 mit den Bürsten des Elektromotors kontaktiert sind. Über die zweiten Einlege-Leiterbahnen 244a und 244b werden die Bürsten mit Strom versorgt. Sie verlaufen ebenfalls spiegelsymmetrisch zur Spiegelachse 238 und sind - zumindest auf der Seite des Bürstenhalters 216 - in der Mitte zwischen den Gruppen 230a und 230b der ersten Einlege-Leiterbahnen angeordnet.

## Patentansprüche

1. Elektromotorischer Antrieb mit einem Elektromotor (12) mit einem Bürstenhalter (16, 116, 216) zur Aufnahme von Bürsten und wenigstens einem Magnetfeldsensor (18a, 18b, 118, 218) zur Erfassung des Magnetfeldes eines auf der Motorankerwelle (32) drehfest angeordneten Magnetrades (19), und einem Elektronikgehäuse (20) zur Aufnahme einer Elektronikplatine (24, 124, 224) für eine Motorleistungs- und/oder Steuerungselektronik, wobei die Elektronikplatine (24) außerhalb eines Elektromotor-Poltopfgehäuses (26) an einem an dem Bürstenhalter (16, 116, 216) angeformten Träger (28, 128, 228) angeordnet ist, **dadurch gekennzeichnet, daß** der wenigstens eine Magnetfeldsensor (18a, 18b, 118, 218) über in den Bürstenhalter (16, 116, 216) wenigstens teilweise integrierte, gebündelt geführte erste Einlege-Leiterbahnen (30a-1..30a-3, 30b-1..30b-3, 130, 230) direkt mit Anschlußpunkten der Steuerungselektronik auf der Elektronikplatine (24, 124, 224) kontaktiert ist.

2. Elektromotorischer Antrieb nach Anspruch 1, **dadurch gekennzeichnet, daß** die Elektronikplatine (24, 124, 224) eine im wesentlichen rechteckige Grundfläche hat.

3. Elektromotorischer Antrieb nach einem der vorhergehenden Ansprüche, **dadurch gekennzeichnet, daß** die Elektronikplatine (24, 124, 224) quer zu der Drehachse der Motorankerwelle (32) angeordnet ist.

4. Elektromotorischer Antrieb nach einem der vorhergehenden Ansprüche, **dadurch gekennzeichnet, daß** das Poltopfgehäuse (26) und/oder das Getriebegehäuse (36) des Antriebs (10) gegen die Elektronikplatine (24, 124, 224) abgedichtet sind.

5. Elektromotorischer Antrieb nach einem der vorhergehenden Ansprüche, **dadurch gekennzeichnet, daß** der Träger (28, 128, 228) an dem Übergang zum Bürstenhalter (16, 116, 216) eine Verjüngung (34, 234) aufweist, und daß die ersten Einlege-Leiterbahnen (30a-1..30a-3, 30b-1..30b-3, 130, 230) in die Verjüngung (34) integriert sind.

6. Elektromotorischer Antrieb nach Anspruch 5, **dadurch gekennzeichnet, daß** zwei Magnetfeldsensoren (18a, 18b, 118, 218) vorgesehen sind, daß der Bürstenhalter (16, 116, 216) und der Träger (28, 128, 228) wenigstens näherungsweise eine Spiegelachse (38) quer zur Drehachse der Motorankerwelle (32) in der Ebene der Elektronikplatine (24, 124, 224) aufweisen, und daß die Magnetfeldsensoren (18a, 18b, 118, 218) in Umfangsrichtung zu dem Magnetrad (19) in näherungsweise gleichen Winkeln bezüglich des Mittelpunktes des Magnetrades und der Spiegelachse (38) angeordnet sind.

7. Elektromotorischer Antrieb nach Anspruch 6, **dadurch gekennzeichnet, daß** zu jedem der beiden Magnetfeldsensoren (18a, 18b, 118, 218) jeweils eine Gruppe (30a, 30b, 130a, 130b, 230a, 230b) von ersten Einlege-Leiterbahnen (30a-1...30a-3, 30b-1...30b-3, 130, 230) geführt ist und daß die Gruppen (30a, 30b, 130a, 130b, 230a, 230b) in der Projektion auf die Ebene der Elektronikplatine (24, 124, 224) näherungsweise symmetrisch bezüglich der Spiegelachse (38) zueinander liegen.

8. Elektromotorischer Antrieb nach einem der vorhergehenden Ansprüche, **dadurch gekennzeichnet, daß** die ersten Einlege-Leiterbahnen (30a-1..30a-3, 30b-1..30b-3, 130, 230), die jeweils den gleichen Magnetfeldsensor (18a, 18b, 118a, 218a) kontaktieren, untereinander im wesentlichen parallel verlaufen.

9. Elektromotorischer Antrieb nach Anspruch 8, **dadurch gekennzeichnet, daß** die Magnetfeldsensoren (218a, 218b) tangential zu dem Rand einer Ausnehmung (221) des Bürstenhalters (216) zur Aufnahme des Magnetrades (19) angeordnet sind, daß die ersten Einlege-Leiterbahnen (230a, 230a, 230b, 230b) bürstenhalterseitig Kontaktenden (240a, 240, 240b, 240) zum Magnetfeldsensor (128a, 218b) aufweisen, daß Kontaktbahnen (242a, 242a, 242b, 242b) der ersten Einlege-Leiterbahnen (230a, 230a, 230b, 230b) zwischen den Kontaktenden (240a, 240, 240b, 240b) und der Elektronikplatine (224) von dem Rand der Ausnehmung (221) zum Rand des Bürstenhalters (216) geführt sind und vom Rand des Bürstenhalters (216) an im wesentlichen parallel zur Kontur des Bürstenhalters (216) bzw. des Trägers (228) und parallel zur Ebene der Elektronikplatine (224) verlaufen.

10. Elektromotorischer Antrieb nach Anspruch 9, **dadurch gekennzeichnet, daß** einzelne der ersten Einlege-Leiterbahnen (30a-1..230a-3, 30b-1..30b-3, 130, 230) im Bürstenhalter (16, 116, 216) zur Drehachse der Motorankerwelle (32) axial versetzt und parallel zur Ebene des Bürstenhalters (16, 116, 216) bzw. des Trägers (28, 128, 228) angeordnet sind.

11. Elektromotorischer Antrieb nach Anspruch 10, **dadurch gekennzeichnet, daß** die einzelnen der ersten Einlege-Leiterbahnen (30a-1..30a-3, 30b-1..30b-3, 130, 230) je nach ihrer axialen Lage auf der Seite der Elektronikplatine (224) mit der Oberseite oder der Unterseite der Elektronikplatine (224) kontaktiert sind.

12. Elektromotorischer Antrieb nach einem der vorhergehenden Ansprüche, **dadurch gekennzeichnet, daß** zweite Einlege-Leiterbahnen (244a, 244b) zur Bestromung der Bürsten wenigstens teilweise in den Bürstenhalter (216) integriert und zwischen dem Träger (228) und dem Bürstenhalter (216) angeordnet sind.

13. Elektromotorischer Antrieb nach Anspruch 12, **dadurch gekennzeichnet, daß** die zweiten Einlege-Leiterbahnen (244a, 244b) zur Bestromung der Bürsten in der Mitte zwischen den Gruppen (230a, 230b) der ersten Einlege-Leiterbahnen angeordnet sind.

14. Elektromotorischer Antrieb nach einem der vorhergehenden Ansprüche, **dadurch gekennzeichnet, daß** der Bürstenhalter (16, 116, 216) aus Kunststoff besteht und die ersten Einlege-Leiterbahnen (30a-1..30a-3, 30b-1..30b-3) in den Bürstenhalter (16, 116, 216) wenigstens teilweise eingespritzt sind.

15. Elektromotorischer Antrieb nach einem der vorhergehenden Ansprüche, **dadurch gekennzeichnet, daß** die ersten Einlege-Leiterbahnen (130a-1..130a-3, 130b-1..130b-3) wenigstens teilweise aus Abschnitten (154a-1, 154a-3) von auf der Oberfläche des Bürstenhalters aufgetragenem leitfähigem Material bestehen.

16. Elektromotorischer Antrieb nach einem der vorhergehenden Ansprüche, **dadurch gekennzeichnet, daß** die ersten Einlege-Leiterbahnen (130a-1..130a-3) auf ihrer von dem wenigstens einen Magnetfeldsensor (118a) abgewandten Seite Kontaktierungsmittel (150a-1..150a-3) zum Anschluß von Steckverbindungen aufweisen.

17. Elektromotorischer Antrieb nach einem der vorhergehenden Ansprüche, **dadurch gekennzeichnet, daß** wenigstens einer der Magnetfeldsensoren (18a, 18b) mit den ihn mit der Steuerungselektronik kontaktierenden Einlege-Leiterbahnen (30a-1..30a-3 bzw. 30b-1..30b-3) verschweißt und/oder verlötet ist.

## Claims

1. Electromotive drive having an electric motor (12) with a brush holder (16, 116, 216) for holding brushes, and at least one magnetic field sensor (18a, 18b, 118, 218) for detecting the magnetic field of a magnet wheel (19) which is arranged on the motor armature shaft (32) in a rotationally fixed manner, and having an electronics housing (20) for holding an electronics board (24, 124, 224) for motor power and/or control electronics, with the electronics board (24) being arranged outside an electric motor pole pot housing (26) on a support (28, 128, 228) which is integrally formed on the brush holder (16, 116, 216), **characterized in that** the at least one magnetic field sensor (18a, 18b, 118, 218) is directly contact-connected to connection points of the control electronics on the electronics board (24, 124, 224) by means of first inlaid conductor tracks (30a-1..30a-3, 30b-1..30b-3, 130, 230) which are at least partially integrated in the brush holder (16, 116, 216) and routed in bundles.

2. Electromotive drive according to Claim 1, **characterized in that** the electronics board (24, 124, 224) has a substantially rectangular basic area.

3. Electromotive drive according to either of the preceding claims, **characterized in that** the electronics board (24, 124, 224) is arranged transverse to the rotation axis of the motor armature shaft (32).

4. Electromotive drive according to one of the preceding claims, **characterized in that** the pole pot housing (26) and/or the gear mechanism housing (36) of the drive (10) are sealed off from the electronics board (24, 124, 224).

5. Electromotive drive according to one of the preceding claims, **characterized in that** the support (28, 128, 228) has a tapered portion (34, 234) at the transition to the brush holder (16, 116, 216), and **in that** the first inlaid conductor tracks (30a-1..30a-3, 30b-1..30b-3, 130, 230) are integrated in the tapered portion (34).

6. Electromotive drive according to Claim 5, **characterized in that** two magnetic field sensors (18a, 18b, 118 218) are provided, **in that** the brush holder (16, 116, 216) and the support (28, 128, 228) have at least approximately one reflection axis (38) transverse to the rotation axis of the motor armature shaft (32) in the plane of the electronics board (24, 124, 224), and **in that** the magnetic field sensors (18a, 18b, 118, 218) are arranged, in the peripheral direction to the magnet wheel (19), at approximately the same angles in relation to the centre point of the magnet wheel and the reflection axis (38).

7. Electromotive drive according to Claim 6, **characterized in that** a group (30a, 30b, 130a, 130b, 230a, 230b) of first inlaid conductor tracks (30a-1..30a-3, 30b-1..30b-3, 130, 230) is in each case routed to each of the two magnetic field sensors (18a, 18b, 118, 218), and **in that** the groups (30a, 30b, 130a, 130b, 230a, 230b), in the projection in the plane of the electronics board (24, 124, 224), lie approximately symmetrically to one another with respect to the reflection axis (38).

8. Electromotive drive according to one of the preceding claims, **characterized in that** the first inlaid conductor tracks (30a-1..30a-3, 30b-1..30b-3, 130, 230), which each make contact with the same magnetic field sensor (18a, 18b, 118a, 218a), run substantially parallel and one beneath the other.

9. Electromotive drive according to Claim 8, **characterized in that** the magnetic field sensors (218a, 218b) are arranged tangentially to the edge of a recess (221) of the brush holder (216) for holding the magnet wheel (19), **in that** the first inlaid conductor tracks (230a, 230a, 230b, 230b) have, at the brush-holder end, contact ends (240a, 240, 240b, 240) to the magnetic field sensor (128a, 218b), **in that** contact paths (242a, 242a, 242b, 242b) of the first inlaid conductor tracks (230a, 230a, 230b, 230b) are routed between the contact ends (240a, 240, 240b, 240b) and the electronics board (224) from the edge of the recess (221) to the edge of the brush holder (216) and run from the edge of the brush holder (216) substantially parallel to the contour of the brush holder (216) or of the support (228) and parallel to the plane of the electronics board (224).

10. Electromotive drive according to Claim 9, **characterized in that** individual ones of the first inlaid conductor tracks (30a-1..30a-3, 30b-1..30b-3, 130, 230) are arranged in the brush holder (16, 116, 216) axially offset to the rotation axis of the motor armature shaft (32) and parallel to the plane of the brush holder (16, 116, 216) or of the support (28, 128, 228).

11. Electromotive drive according to Claim 10, **characterized in that** the individual ones of the first inlaid conductor tracks (30a-1..30a-3, 30b-1..30b-3, 130, 230) are contact-connected to the upper face or the lower face of the electronics board (224) depending on the axial position of said inlaid conductor tracks on the side of the electronics board (224).

12. Electromotive drive according to one of the preceding claims, **characterized in that** second inlaid conductor tracks (244a, 244b) for supplying power to the brushes are at least partly integrated in the brush holder (216) and are arranged between the support (228) and the brush holder (216).

13. Electromotive drive according to Claim 12, **characterized in that** the second inlaid conductor tracks (244a, 244b) for supplying power to the brushes are arranged in the centre between the groups (230a, 230b) of the first inlaid conductor tracks.

14. Electromotive drive according to one of the preceding claims, **characterized in that** the brush holder (16, 116, 216) comprises plastic and the first inlaid conductor tracks (30a-1..30a-3, 30b-1..30b-3) are at least partly injection-moulded into the brush holder (16, 116, 216).

15. Electromotive drive according to one of the preceding claims, **characterized in that** the first inlaid conductor tracks (130a-1..130a-3, 130b-1..130b-3) at least partly comprise portions (154a-1, 154a-3) of conductive material which is applied to the surface of the brush holder.

16. Electromotive drive according to one of the preceding claims, **characterized in that** the first inlaid conductor tracks (130a-1..130a-3) have, on their side which is averted from the at least one magnetic field sensor (118a), contact-making means (150a-1..150a-3) for the connection of plug-type connections.

17. Electromotive drive according to one of the preceding claims, **characterized in that** at least one of the magnetic field sensors (18a, 18b) is welded and/or soldered to the inlaid conductor tracks (30a-1..30a-3 or 30b-1..30b-3) which contact-connect said magnetic field sensor to the control electronics.

## Revendications

1. Entraînement par moteur électrique, qui présente un moteur électrique (12) doté d'un porte-balais (16, 116, 216) qui reprend des balais, d'au moins un détecteur (18a, 18b, 118, 218) de champ magnétique qui détecte le champ magnétique d'une roue magnétique (19) disposée à rotation solidaire sur l'arbre (32) de l'induit du moteur et d'un boîtier électronique (20) qui reprend une carte électronique (24, 124, 224) d'une électronique de puissance du moteur et/ou de commande,
la carte électronique (24) étant disposée à l'extérieur d'un boîtier (26) du chapeau polaire du moteur électrique sur un support (28, 128, 228) formé sur le porte-balais (16, 116, 216),
**caractérisé en ce que**
le ou les détecteurs (18a, 18b, 118, 218) de champ magnétique sont mis en contact direct avec des points de raccordement de l'électronique de commande de la carte électronique (24, 124, 224) par l'intermédiaire de premières pistes conductrices d'insertion (30a-1...30a-3, 30b-1...30b-3, 130, 230) ramenées en faisceau et au moins partiellement intégrées dans le porte-balais (16, 116, 216).

2. Entraînement par moteur électrique selon la revendication 1, **caractérisé en ce que** la carte électronique (24, 124, 224) a une surface de base essentiellement rectangulaire.

3. Entraînement par moteur électrique selon l'une des revendications précédentes, **caractérisé en ce que** la carte électronique (24, 124, 224) est disposée transversalement par rapport à l'axe de rotation de l'arbre (32) de l'induit du moteur.

4. Entraînement par moteur électrique selon l'une des revendications précédentes, **caractérisé en ce que** le boîtier (26) du chapeau polaire et/ou le boîtier (36) de la transmission de l'entraînement (10) sont fermés hermétiquement par rapport à la carte électronique (24, 124, 224).

5. Entraînement par moteur électrique selon l'une des revendications précédentes, **caractérisé en ce qu'**à la transition avec le porte-balais (16, 116, 216), le support (28, 128, 228) présente un rétrécissement (34, 234) et **en ce que** les premières pistes conductrices d'insertion (30a-1...30a-3, 30b-1...30b-3, 130, 230) sont intégrées dans le rétrécissement (34).

6. Entraînement par moteur électrique selon la revendication 5, **caractérisé en ce que** deux détecteurs (18a, 18b, 118, 218) de champ magnétique sont prévus, **en ce que** le porte-balais (16, 116, 216) et le support (28, 118, 228) présentent au moins approximativement un axe de symétrie (38) transversal par rapport à l'axe de rotation de l'arbre (32) de l'induit du moteur dans le plan de la carte électronique (24, 124, 224) et **en ce que** les détecteurs (18a, 18b, 118, 218) de champ magnétique sont disposés dans la direction périphérique de la roue magnétique (19) à des angles sensiblement égaux par rapport au centre de la roue magnétique et de l'axe de symétrie (38).

7. Entraînement par moteur électrique selon la revendication 6, **caractérisé en ce qu'**un groupe (30a, 30b, 130a, 130b, 230a, 230b) de premières pistes conductrices d'insertion (30a-1...30a-3, 30b-1...30b-3, 130, 230) est amené à chacun des détecteurs (18a, 18b, 118, 218) de champ magnétique et **en ce que** les groupes (30a, 30b, 130a, 130b, 230a, 230b) sont disposés de manière approximativement symétrique par rapport à l'axe de symétrie (38) dans une projection sur le plan de la carte électronique (24, 124, 224).

8. Entraînement par moteur électrique selon l'une des revendications précédentes, **caractérisé en ce que** les premières pistes conductrices d'insertion (30a-1...30a-3, 30b-1...30b-3,130, 230) qui assurent le contact avec un même détecteur (18a, 18b, 118a, 218a) de champ magnétique sont essentiellement parallèles les unes aux autres.

9. Entraînement par moteur électrique selon la revendication 8, **caractérisé en ce que** les détecteurs (218a, 218b) de champ magnétique sont disposés tangentiellement par rapport au bord d'une découpe (221) ménagée dans le porte-balais (216) pour reprendre la roue magnétique (19), **en ce que** les premières pistes conductrices d'insertion (230a, 230a, 230b, 230b) présentent du côté du porte-balais des extrémités de contact (240a, 240, 240b, 240) avec le détecteur (128a, 218b) de champ magnétique, **en ce que** des pistes de contact (242a, 242a, 242b, 242b) des premières pistes conductrices d'insertion (230a, 230a, 230b, 230b) sont posées entre le bord de la découpe (221) et le bord du porte-balais (216) entre les extrémités de contact (240a, 240, 240b, 240b) et la carte électronique (224) et s'étendent depuis le bord du porte-balais (216) essentiellement parallèlement au contour du porte-balais (216) ou du support (228) et parallèlement au plan de la carte électronique (224).

10. Entraînement par moteur électrique selon la revendication 9, **caractérisé en ce que** certaines des premières pistes conductrices d'insertion (30a-1...230a-3, 30b-1...30b-3, 130, 230) sont décalées axialement par rapport à l'axe de rotation de l'arbre (32) de l'induit du moteur dans le porte-balais (16, 116, 216) et sont disposées parallèlement au plan du porte-balais (16, 116, 216) ou du support (28, 128, 228).

11. Entraînement par moteur électrique selon la revendication 10, **caractérisé en ce que** les différentes premières pistes conductrices d'insertion (30a-1...30a-3, 30b-1...30b-3, 130, 230) sont en contact avec le côté supérieur ou le côté inférieur de la carte électronique (224) en fonction de leur position axiale sur le côté de la carte électronique (224).

12. Entraînement par moteur électrique selon l'une des revendications précédentes, **caractérisé en ce que** des deuxièmes pistes conductrices d'insertion (244a, 244b) qui alimentent les balais en courant sont intégrées au moins en partie dans le porte-balais (216) et sont disposées entre le support (228) et le porte-balais (216).

13. Entraînement par moteur électrique selon la revendication 12, **caractérisé en ce que** les deuxièmes pistes conductrices d'insertion (244a, 244b) qui alimentent les balais en courant sont disposées au milieu entre les groupes (230a, 230b) des premières pistes conductrices d'insertion.

14. Entraînement par moteur électrique selon l'une des revendications précédentes, **caractérisé en ce que** le porte-balais (16, 116, 216) est réalisé en matière synthétique et **en ce que** les premières pistes conductrices d'insertion (30a-1...30a-3, 30b-1...30b-3) sont injectées au moins en partie dans le porte-balais (16, 116, 216).

15. Entraînement par moteur électrique selon l'une des revendications précédentes, **caractérisé en ce que** les premières pistes conductrices d'insertion (130a-1...130a-3, 130b-1...130b-3) sont au moins en partie constituées de tronçons (154a-1, 154a-3) de matériau conducteur appliqués sur la surface du porte-balais.

16. Entraînement par moteur électrique selon l'une des revendications précédentes, **caractérisé en ce que** sur leur côté non tourné vers le ou les détecteurs (118a) de champ magnétique, les premières pistes conductrices d'insertion (130a-1...130a-3) présentent des moyens de contact (150a-1...150a-3) destinés à raccorder des raccords enfichables.

17. Entraînement par moteur électrique selon l'une des revendications précédentes, **caractérisé en ce qu'**au moins un des détecteurs (18a, 18b) de champ magnétique est soudé et/ou brasé sur les pistes conductrices d'insertion (30a-1...30a-3 ou 30b-1...30b-3) qui assurent le contact avec l'électronique de commande.
